# FASCICULE DE BREVET EUROPEEN

(11) **EP 3 812 216 B1**
(45) Date de publication et mention de la délivrance du brevet: **18.09.2024**
(21) Numéro de dépôt: 20202151.5
(22) Date de dépôt: 15.10.2020
(51) Int. Cl.: B60S 1/08

(54) **CAMÉRA DE RECUL ESCAMOTABLE DANS UN BECQUET MOBILE**
EINZIEHBARE RÜCKWÄRTSFAHRKAMERA IN EINEM BEWEGLICHEN SPOILER
RETRACTABLE BACKUP CAMERA IN A MOBILE SPOILER

(30) Priorité: 25.10.2019 FR 1911959
(43) Date de publication de la demande: 28.04.2021
(73) Titulaire: OPmobility SE, 69007 Lyon (FR)
(72) Inventeur: UTTER, Jérôme, 01150 SAINTE-JULIE (FR)
(74) Mandataire: LLR

(56) Documents cités:
- EP-A1- 1 733 922
- EP-A2- 0 849 146
- DE-A1- 102015 013 046
- DE-A1- 102016 117 066
- FR-A1- 3 029 164
- FR-A1- 3 073 808
- JP-A- H04 138 943

## Description

L'invention concerne le domaine de l'industrie automobile, et plus particulièrement le domaine des caméras montées à l'arrière de véhicule automobile. L'invention a notamment trait à un becquet arrière mobile permettant de moduler l'aérodynamisme du véhicule. L'invention a également trait à un ouvrant de véhicule et à un véhicule équipé d'un tel becquet.

On connaît déjà dans l'état la technique, des véhicules automobiles équipées de systèmes d'aide à la conduite et/ou de systèmes d'aide au stationnement.

Parmi les systèmes d'aide au stationnement, on connait des systèmes équipés de caméras. Des véhicules automobiles sont ainsi équipés de caméras positionnées à l'avant et/ou à l'arrière de véhicule, afin de fournir une meilleure vision au conducteur effectuant une manoeuvre de stationnement.

Les caméras positionnées à l'arrière d'un véhicule sont appelées « caméra de rétro-vision » ou encore « caméra de recul ».

La plupart des caméras de recul sont montées fixes sur l'arrière du véhicule au niveau de l'ouvrant (porte de coffre ou de hayon), ou au niveau du parechoc.

De telles caméras sont soumises aux éléments extérieurs durant toute la vie du véhicule, et risquent donc d'être salies pendant le roulage, mais également à l'arrêt lorsque des mains viennent toucher la caméra, par exemple pour ouvrir l'ouvrant. Une fois salie, les caméras de recul peuvent ne plus être suffisamment propres pour assurer une rétro-vision correcte et permettre une manoeuvre de recul en toute sécurité.

Afin de protéger une caméra de recul, il est connu d'utiliser une caméra escamotable derrière le logo fixé sur l'arrière du véhicule.

Toutefois un tel système oblige à assembler un système mécanique et une source d'alimentation supplémentaires sur le véhicule, ce qui alourdit le véhicule, et ralentit la chaîne de production.

Par ailleurs, les caméras sont positionnées au niveau de la plaque d'immatriculation ou sur le parechoc arrière du véhicule. Or cette position de la caméra n'offre pas toujours un angle de vue satisfaisant pour réaliser certaines manoeuvres.

Les documents DE 10 2015 013 046 A1, FR 3 073 808 A1 et EP 0 849 146 A2 décrivent des becquets mobiles de véhicules automobiles. Le document FR 3 029 164 A1 décrit un becquet fixe de véhicule automobile. Le document DE 10 2016 117 066 A1 décrit un dispositif aérodynamique mobile situé en face avant d'un véhicule automobile.

Le document EP1733922A1 divulgue un becquet arrière conformément au préambule de la revendication 1.

L'invention a notamment pour but de s'affranchir des problèmes précités, en installant la caméra de recul sur un becquet mobile.

A cet effet l'invention a pour objet une pièce de carrosserie de véhicule automobile selon la revendication 1.

Ainsi, on obtient un dispositif dans lequel la caméra de recul est placée sur un élément mobile déjà existant sur le véhicule. Il n'est donc pas nécessaire de prévoir un mécanisme et une alimentation dédiés exclusivement aux mouvements de la caméra de recul. Le circuit d'alimentation de l'élément aérodynamique mobile peut dès lors être utilisé pour l'alimentation de la caméra de recul.

De plus, et de par son positionnement sur l'élément aérodynamique mobile, la caméra de recul a un champ de vision optimal.

Enfin, elle peut ne pas être assujettie aux conditions climatiques extérieures lorsque l'élément aérodynamique mobile est en position rétractée et a un impact limité voire nul sur l'esthétique du véhicule.

Selon l'invention :
- la caméra de recul n'est pas visible depuis l'extérieur du véhicule lorsque la pièce de carrosserie est montée sur le véhicule et l'élément aérodynamique mobile est en position rétractée. Comme expliqué auparavant, cela permet de protéger la caméra de recul des condition extérieures auxquelles peut être exposé le véhicule et permet également de conserver un aspect esthétique optimal ;
- la pièce de carrosserie comporte un logement pour accueillir la caméra de recul lorsque l'élément aérodynamique mobile est en position rétractée ; et
- le logement comporte un moyen de nettoyage de la caméra de recul. Cela permet de ne pas diminuer les performances de la caméra de recul au cours du temps.

Suivant d'autres caractéristiques optionnelles de la pièce de carrosserie, prises seules ou en combinaison :
- les moyens de déplacement permettent de mouvoir l'élément aérodynamique mobile dans la position déployée lorsque le véhicule roule en marche arrière et/ou lorsque le véhicule roule à une vitesse supérieure à 10km/h,
- les moyens de déplacement permettent de mouvoir l'élément aérodynamique mobile dans une position aérodynamique lorsque le véhicule roule à une vitesse supérieure à 10km/h, la position déployée étant une position intermédiaire entre la position rétractée et la position aérodynamique.
- la pièce de carrosserie constitue un ouvrant de type coffre ; et
- la pièce de carrosserie constitue un ouvrant de type hayon.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue de côté illustrant un véhicule automobile équipé d'un becquet arrière mobile en position rétractée.
[Fig. 2] la figure 2 est une vue de côté illustrant le véhicule automobile de la figure 1, lorsque le becquet arrière mobile est en position déployée.
[Fig. 3] la figure 3 illustre un becquet arrière mobile équipé d'une caméra de recul.

### Description détaillée

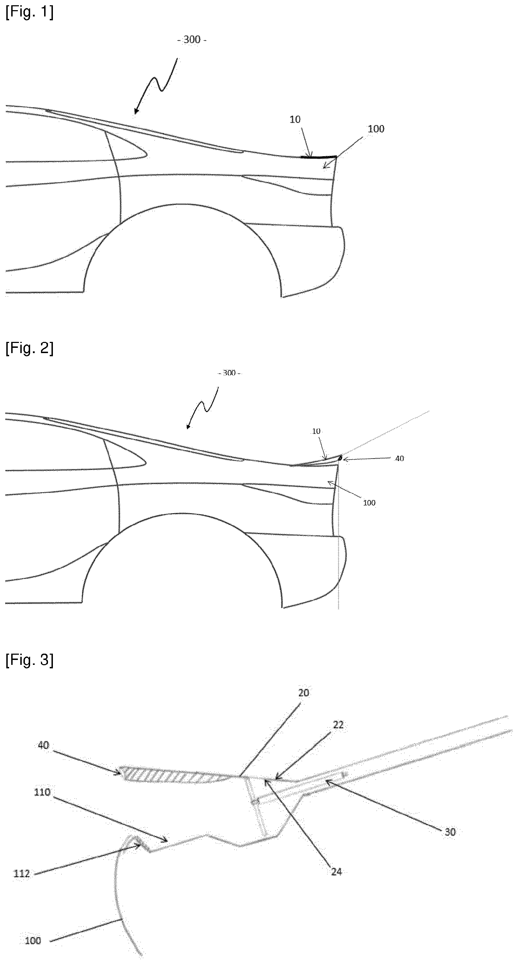

Les figures 1 et 2 illustrent un véhicule automobile 300 équipé d'un becquet 10 arrière mobile.

On appelle becquet arrière (ou « spoiler » en anglais) une pièce de carrosserie formant une extension positionnée à l'arrière du véhicule, et destinée à améliorer les performances aérodynamiques du véhicule sur laquelle cette pièce est placée. Ils sont généralement situés en partie haute et arrière du véhicule, au niveau des bords de la lunette. Le becquet arrière est fixé soit sur le toit, soit sur le hayon, soit sur le coffre, horizontalement ou verticalement, en saillie vers l'arrière du véhicule.

A faible vitesse, cette utilité aérodynamique disparaît et le becquet arrière, s'il reste fixe en position déployée, vient rompre l'harmonie des courbes de la partie arrière du véhicule. C'est la raison pour laquelle on souhaite le rendre le moins visible possible à faible vitesse ou à l'arrêt.

On entend par « becquet arrière mobile » un becquet arrière comportant au moins un élément aérodynamique mobile par rapport au véhicule sur lequel il est installé. La lame aérodynamique du becquet peut être entièrement mobile, ou comporter un élément mobile. L'élément aérodynamique est mobile en ce que l'angle de cet élément (une lame) avec le toit ou le coffre est modifié en fonction des conditions de roulage, notamment, selon l'invention, pour les manoeuvres de stationnement.

Sur l'exemple de la figure 1, le becquet 10 arrière comporte un élément aérodynamique mobile 20, par exemple une lame aérodynamique mobile, qui se déploie en rotation autour d'un axe. D'autre mécanisme de mouvement sont connus. Par exemple, on connait des becquets mobiles en translation. Sur la figure 1, l'élément mobile est en position rétractée, et sur la figure 2, il est en position déployée. Sur la figure 2, les lignes grises illustrent le champ de vision de la caméra de recul 40. Ce champ de vision est plus grand que le champ de vision d'une caméra de recul installée classiquement sur le parechoc ou au niveau du logo.

Selon cet exemple de réalisation de l'invention, le becquet 10 comprend un élément (aérodynamique) mobile 20 capable de prendre deux positions différentes en fonction de la vitesse du véhicule, et en fonction du sens de circulation du véhicule, grâce à des moyens de déplacement 30, par exemple actifs.

La figure 3 illustre en détail un exemple de becquet arrière 10 selon l'invention. Il comporte un élément aérodynamique mobile 20 et des moyens de déplacement 30 permettant de mouvoir l'élément aérodynamique mobile 20 entre une position rétractée et une position déployée.

En position rétractée, l'élément aérodynamique mobile 20 est donc escamoté à la vue. Cette position est celle de l'élément aérodynamique mobile 20 lorsque le véhicule se déplace en marche avant en dessous d'une vitesse de seuil, par exemple 10km/h, et également lorsque le véhicule est à l'arrêt.

En position déployée, l'élément aérodynamique mobile 20 permet :
- d'améliorer les performances aérodynamiques en décalant plus vers l'arrière du véhicule les points de décollement de l'air par rapport au véhicule ce qui permet de réduire la trainée de pression, les décollements, les culots et les turbulences ; cette position est celle de l'élément aérodynamique mobile 20 lorsque le véhicule atteint et dépasse la vitesse de seuil, par exemple 10km/h ;
- de sortir la caméra de recul pour filmer l'arrière du véhicule ; cette position est celle de l'élément aérodynamique mobile 20 lorsque le véhicule est en marche arrière.

L'élément aérodynamique mobile 20 est configuré pour améliorer la stabilité du véhicule (gestion du Cz) ou pour réduire la trainée du véhicule (gestion du Cx).

L'élément aérodynamique mobile 20 comporte une face supérieure 22 et une face inférieure 24. La face supérieure 22 est de préférence sensiblement alignée avec un prolongement imaginaire de la ligne d'écoulement du toit ou du coffre, pour des raisons aérodynamiques et/ou pour des raisons de style. La face supérieure 22 est donc tournée vers le haut lorsque le becquet est monté sur le véhicule. La face inférieure 24 est la face opposée à la face supérieure ; elle n'est pas visible lorsque l'élément aérodynamique mobile 20 est en position rétractée.

L'élément aérodynamique mobile 20 comporte une caméra de recul 40. La caméra de recul 40 est positionnée sous l'élément aérodynamique mobile 20, c'est-à-dire sur la face inférieure 24 tournée vers le véhicule par opposition à la face supérieure 22 tournée vers le ciel. Dans l'exemple illustré sur la figure 3, la caméra de recul 40 est rapportée sur la face intérieure 24 de l'élément aérodynamique mobile 20, par tout moyen de fixation conventionnel connu de l'homme du métier. Alternativement, il est envisageable que l'élément aérodynamique mobile 20 soit un corps creux à l'intérieur duquel la caméra de recul 40 est ménagée.

Ainsi, lorsque l'élément aérodynamique mobile 20 est en position rétractée, la caméra de recul 40 n'est pas visible depuis l'extérieur du véhicule 300.

L'élément aérodynamique mobile 20 est mis en mouvement par un moyen de déplacement 30, tel qu'un moyen moteur. De préférence, le moyen de déplacement 30 est situé sous la face supérieure 22 de l'élément aérodynamique mobile 20, de façon à ne pas perturber l'écoulement d'air provenant du toit ou du coffre puis glissant sur la face supérieure 22 de l'élément aérodynamique mobile 20.

Le moyen de déplacement 30 permet de mouvoir l'élément aérodynamique mobile 20 dans la position déployée lorsque le véhicule est à l'arrêt ou roule à une vitesse inférieure à 10km/h.

Dans l'exemple illustré sur la figure 3, les moyens de déplacement 30 comprennent un vérin (il peut par exemple s'agir d'un vérin électrique contrôlé par un moteur) dont l'extrémité mobile est reliée à deux bielles. Une bielle est reliée à l'élément aérodynamique mobile 20 et l'autre est reliée à la partie immobile de la pièce de carrosserie 100 comportant le becquet 40. Les deux bielles sont articulées l'une avec l'autre au niveau de leurs extrémités opposées aux extrémités respectivement reliées à l'élément aérodynamique mobile 20 et à la partie immobile de la pièce de carrosserie 100. L'extrémité mobile du vérin (i.e. l'extrémité libre du piston) est reliée au point d'articulation des deux bielles entre elles. L'extrémité mobile du vérin permet, lorsque le piston est en position rétractée dans la chambre, d'aligner les bielles de manière à positionner l'élément aérodynamique mobile 20 en position déployée, comme cela est visible sur la figure 3. Lorsque le piston est poussé hors de la chambre, il permet de replier les bielles et par conséquent de rétracter l'élément aérodynamique mobile 20.

Selon un mode de réalisation, le moyen de déplacement 30 permet de mouvoir l'élément aérodynamique mobile 20 dans une position aérodynamique lorsque le véhicule roule à une vitesse supérieure à 10km/h, la position déployée étant une position intermédiaire entre la position rétractée et la position aérodynamique. La position déployée est ainsi une position dédiée à l'utilisation de la caméra de recul 40. Dans cette position, la caméra de recul 40 est sortie.

L'invention concerne également une pièce de carrosserie 100 de véhicule automobile 300 comportant un becquet 10 selon l'invention. Il peut s'agir d'un ouvrant de type coffre, ou un ouvrant de type hayon.

Lorsque la pièce de carrosserie 100 est montée sur le véhicule, et lorsque l'élément aérodynamique mobile 20 est en position rétractée, la caméra de recul 40 n'est pas visible depuis l'extérieur du véhicule 300.

Selon l'invention, la pièce de carrosserie 100 comporte un logement 110 pour accueillir la caméra de recul 40 lorsque l'élément aérodynamique mobile 20 est en position rétractée. Selon l'invention, le logement 110 comporte un moyen de nettoyage 112 de la caméra de recul 40.

### Liste de références

- 10 :: becquet arrière mobile
- 20 :: élément aérodynamique mobile du becquet 10
- 22 :: face supérieure de l'élément aérodynamique mobile 20
- 24 :: face inférieure de l'élément aérodynamique mobile 20
- 30 :: moyens de déplacement de l'élément aérodynamique mobile 20
- 40 :: caméra de recul du becquet 10
- 100 :: pièce de carrosserie comportant un becquet 10
- 110 :: logement pour accueillir la caméra de recul 40
- 112 :: moyen de nettoyage de la caméra de recul 40
- 300 :: véhicule automobile

## Revendications

1. Pièce de carrosserie (100) de véhicule automobile (300) comportant un becquet (10) arrière de véhicule automobile comprenant au moins un élément aérodynamique mobile (20) et des moyens de déplacement (30) permettant de mouvoir l'élément mobile (20) entre une position rétractée et une position déployée, dont l'élément aérodynamique mobile (20) comporte une caméra de recul (40), la caméra de recul (40) n'étant pas visible depuis l'extérieur du véhicule (300) lorsque la pièce de carrosserie (100) est montée sur le véhicule (300) et l'élément aérodynamique mobile (20) est en position rétractée, la pièce de carrosserie (100) comprenant un logement (110) pour accueillir la caméra de recul (40) lorsque l'élément aérodynamique mobile (20) est en position rétractée, **caractérisée en ce que** le logement (110) comporte un moyen de nettoyage de la caméra de recul (40).

2. Pièce de carrosserie selon la revendication précédente, dans lequel les moyens de déplacement (30) permettent de mouvoir l'élément aérodynamique mobile (20) dans la position déployée lorsque le véhicule roule en marche arrière et/ou lorsque le véhicule roule à une vitesse supérieure à 10km/h.

3. Pièce de carrosserie (100) selon l'une des revendications précédentes, dans lequel les moyens de déplacement (30) permettent de mouvoir l'élément aérodynamique mobile (20) dans une position aérodynamique lorsque le véhicule roule à une vitesse supérieure à 10km/h, la position déployée étant une position intermédiaire entre la position rétractée et la position aérodynamique.

4. Pièce de carrosserie (100) selon l'une des revendications précédentes, constituant un ouvrant de type coffre.

5. Pièce de carrosserie (100) selon l'une des revendications 1 à 3, constituant un ouvrant de type hayon.

## Patentansprüche

1. Karosserieteil (100) eines Kraftfahrzeugs (300) mit einem Heckspoiler (10) des Kraftfahrzeugs, der mindestens ein bewegliches aerodynamisches Element (20) und eine Bewegungseinrichtung (30) aufweist, die es ermöglichen, das bewegliche Element (20) zwischen einer eingefahrenen Position und einer ausgefahrenen Position zu bewegen, wobei das bewegliche aerodynamische Element (20) eine Rückfahrkamera (40) aufweist, die Rückfahrkamera (40) von außerhalb des Fahrzeugs (300) nicht sichtbar ist, wenn das Karosserieteil (100) an dem Fahrzeug (300) angebracht ist und das bewegliche aerodynamische Element (20) sich in der eingefahrenen Position befindet, wobei das Karosserieteil (100) eine Aufnahme (110) zur Aufnahme der Rückfahrkamera (40) aufweist, wenn das bewegliche aerodynamische Element (20) sich in der eingefahrenen Position befindet, **dadurch gekennzeichnet, dass** die Aufnahme (110) ein Mittel zum Reinigen der Rückfahrkamera (40) aufweist.

2. Karosserieteil nach dem vorhergehenden Anspruch, wobei die Bewegungseinrichtung (30) es ermöglicht, das bewegliche aerodynamische Element (20) in die ausgefahrene Position zu bewegen, wenn das Fahrzeug rückwärts fährt und/oder wenn das Fahrzeug mit einer Geschwindigkeit von mehr als 10 km/h fährt.

3. Karosserieteil (100) nach einem der vorhergehenden Ansprüche, wobei die Bewegungseinrichtung (30) es ermöglicht, das bewegliche aerodynamische Element (20) in eine aerodynamische Position zu bewegen, wenn das Fahrzeug mit einer Geschwindigkeit von mehr als 10 km/h fährt, wobei die ausgefahrene Position eine Zwischenposition zwischen der eingefahrenen Position und der aerodynamischen Position ist.

4. Karosserieteil (100) nach einem der vorhergehenden Ansprüche, das eine kofferraumartige Öffnung bildet.

5. Karosserieteil (100) nach einem der Ansprüche 1 bis 3, das eine heckklappenartige Öffnung bildet.

## Claims

1. A bodywork part (100) of a motor vehicle (300) comprising a rear spoiler (10) of a motor vehicle comprising at least one movable aerodynamic element (20) and displacement means (30) allowing the movable aerodynamic element (20) to be moved between a retracted position and a deployed position, the movable aerodynamic element (20) comprising a reversing camera (40), the reversing camera (40) not being visible from outside the vehicle (300) when the bodywork part (100) is mounted on the vehicle (300) and the movable aerodynamic element (20) is in the retracted position, the bodywork part (100) comprising a housing (110) for accommodating the reversing camera (40) when the movable aerodynamic element (20) is in the retracted position, **characterized in that** the housing (110) comprises a means for cleaning the reversing camera (40).

2. The bodywork part (100) according to the preceding claim, in which the displacement means (30) make it possible to move the movable aerodynamic element (20) into the deployed position when the vehicle is driving in reverse and/or when the vehicle is driving at a speed greater than 10km/h.

3. The bodywork part (100) according to any one of the preceding claims, in which the displacement means (30) make it possible to move the movable aerodynamic element (20) into an aerodynamic position when the vehicle is driving at a speed greater than 10 km/h, the deployed position being an intermediate position between the retracted position and the aerodynamic position.

4. The bodywork part (100) according to any one of the preceding claims, constituting a trunk-type opening.

5. The bodywork part (100) according to any one of claims 1 to 3, constituting a tailgate-type opening.
